# EUROPEAN PATENT SPECIFICATION

(11) **EP 4 145 683 B1**
(45) Date of publication and mention of the grant of the patent: **22.11.2023**
(21) Application number: 21195068.8
(22) Date of filing: 06.09.2021
(51) Int. Cl.: H02K 1/32, H02K 7/00, H02K 9/06, H02K 9/19, H02K 21/12

(54) **HOLLOW SHAFT FOR A ROTOR OF ELECTRIC MOTOR**
HOHLWELLE FÜR EINEN ROTOR EINES ELEKTROMOTORS
ARBRE CREUX POUR UN ROTOR D'UN MOTEUR ÉLECTRIQUE

(43) Date of publication of application: 08.03.2023
(73) Proprietor: MAHLE International GmbH, 70376 Stuttgart (DE)
(72) Inventor: SEVER, Peter, 9000 Murska Sobota (SI)
(74) Representative: BRP Renaud & Partner mbB Rechtsanwälte Patentanwälte Steuerberater

(56) References cited:
- DE-A1-102009 029 716
- DE-A1-102011 078 791
- JP-A- 2011 254 571
- US-A1- 2020 076 257
- US-B2- 9 287 747

## Description

The main object of the invention relates to the rotors of electric motors for the traction drive of an electric vehicle, where the electric motor is directly cooled by dielectric coolant - oil.

EP 3 507 889 B1 discloses a rotor of an asynchronous electric motor, comprising a squirrel-cage and laminated rotor core cast in aluminum alloy and forming the filler body, where two shaft journals are used to fasten the filler body in place by a cooling duct interconnecting the shaft journals on both sides of the filler body. The oil for cooling a rotor, a stator, and a winding of the electric motor is introduced into the cooling duct, where a plurality of radial holes within the cooling duct if used to deliver the oil into the jacket-like cavity between the filler body and the cooling duct. Finally, the oil is released out of the rotor through the plurality of radial bores and/or radial passages on both sides of the rotor formed by the filler body and shaft journal.

US 9 287 747 B2, JP 2011 254571 A and DE 10 2009 029716 A1 provide further examples of rotor cooling.

In the known solutions, not all laminated rotor cores are cast in aluminum alloy to provide a filler body, thus for alternative embodiments, where filler body is not available or not an option for sake of electromagnetic design limitations, there is a lack of a solution for a directly cooled rotor of synchronous electric motors.

It is therefore the object of the invention to provide an improved or at least alternative embodiment of the apparatus described, in which disadvantages described are overcome.

This object is solved according to the invention by the object of independent claim 1. Advantageous embodiments are the subject of the dependent claims.

The present invention is based on the general idea to use an impeller on a rotor of an electric motor for traction drives in a function of a pump for propelling a coolant through the cooling system of the electric motor, and thereby to use a hollow shaft for receiving a laminated rotor core in place, wherein the coolant is released into the shaft preferably by a non-contacting stationary nozzle within an area of an inlet aperture, thus the coolant is introduced directly into the main cavity of the hollow shaft comprising a plurality of channels with outlet apertures in the area of an intake for the impeller. Advantageously, by cooling a stator and windings of the electric motor with impeller in a combination of the hollow shaft, a cooling performance and thus a continuous power of the electric motor is significantly increased, wherein a slip of the coolant is achieved by a gradual acceleration of the coolant to the target circumferential speed within the main cavity of the hollow shaft of the rotor, thus also the efficiency of the electric motor is essentially improved.

In the present invention, the compound term "first/second" is used to simplify the description. In the context of the present invention, the individual terms "first" and "second" of the compound term "first/second" are always linked with an "and/or". Thus, in the rotor, the "first" element and/or the "second" element may be present. In this case, the respective "first" element is exclusively associated with a further "first" element of the rotor or the first axial end of the rotor, and the respective "second" element is exclusively associated with a further "second" element of the rotor or the second axial end of the rotor. Where the individual terms "first" and "second" are not used in the composite term "first/second", they are to be understood in accordance with this usage. Moreover, in the present invention, the terms "axial" and "radial" always refer to the axis of rotation.

A rotor of an electric motor comprises a hollow shaft and a rotor core. In an advantageous embodiment, the hollow shaft is a two-part hollow structure, comprising a hollow shaft core and corresponding supporting body, adapted to be assembled and adapted to receive the rotor core in place. In an advantageous embodiment, the hollow shaft is a cylindrical body comprising a first end and a second end on the opposite side of the hollow shaft. In an advantageous embodiment, the hollow shaft is assembled by a press-fit connection. Such a press-fit connection is easy to make and does not require any further fasteners. The shaft in an alternative embodiment is assembled by interference fit and/or transition fit in combination with welding. The hollow shaft comprises an inlet aperture for introducing the coolant, and, in an advantageous embodiment, a datum feature for positioning the rotor core on the outer surface of the hollow shaft. For releasing the coolant out of the hollow shaft the hollow shaft comprises a plurality of channels and/or apertures and/or passages and/or bores, in an advantageous embodiment provided and/or created and/or manufactured by machining after assembling the shaft, at least in the area of one end of the hollow shaft. The rotor core comprises a cylindrical body further comprising a plurality of laminated sheets of electric steel, wherein the rotor core comprises a first adjacent front surface on a first side of the rotor core and a second adjacent front surface on the second - opposite - side of the rotor core. In an advantageous embodiment, the rotor core is installed on the hollow shaft by interference fit and/or transition fit, and or clamping nut. The rotor core in the advantageous embodiment further comprises a plurality of magnets and a resin for fixation of the magnets in the rotor core, wherein the rotor core further comprises an impeller with a plurality of blades to promote the flow of the coolant within an enclosure of the electric motor. In an advantageous embodiment, the channels for releasing the coolant out of the hollow shaft are in the area close to the outer peripheral edge of the hollow shaft, more precisely in the area of a press-fit connection between the hollow shaft core and corresponding supporting body, wherein the number of the channels is preferably equal to the number of the blades on the impeller, and wherein the position of the channels is aligned to a leading edge of the corresponding blades.

The inlet aperture can be arranged radially inwardly of the plurality of channels, and an inner wall of the main cavity can extend over a curved or inclined section towards the maximum diameter of the main cavity. In this way the coolant can be gradually accelerated to a maximum angular velocity in the cavity due to boundary flow of the coolant along the cavity wall.

Further important features and advantages of the invention are apparent from the subclaims, from the drawings, and from the accompanying figure description based on the drawings.

It is understood that the above features and those to be explained below can be used not only in the combination indicated in each case, but also in other combinations or on their own, without departing from the scope of the present invention.

Preferred embodiments of the invention are shown in the drawings and will be explained in more detail in the following description, wherein identical reference signs refer to identical or similar or functionally identical components.

It shows, each schematically
- Fig. 1: an isometric view of a rotor for an electric motor according to the invention in an advantageous embodiment;
- Fig. 2: a side view of the rotor for the electric motor according to the invention in the advantageous embodiment;
- Fig. 3: a sectional view of the rotor for the electric motor according to the invention in the advantageous embodiment;
- Fig. 4: a detailed sectional view of the rotor for the electric motor according to the invention in the advantageous embodiment;
- Fig. 5: an isometric view of the hollow shaft according to the invention in the advantageous embodiment, here shown in an exploded view.

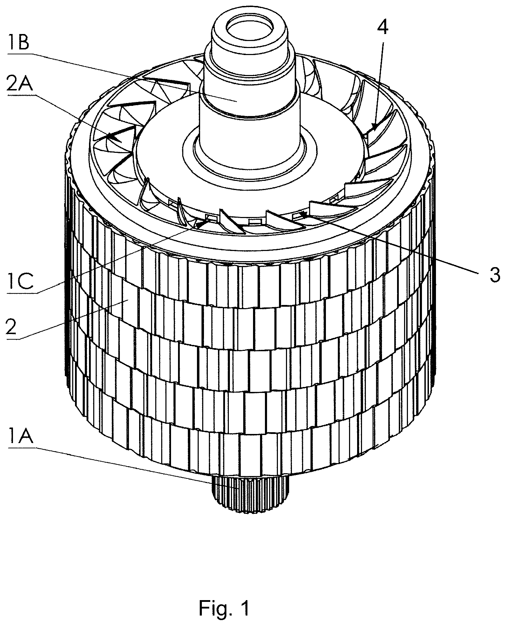

Fig. 1 shows an isometric view of an overmolded rotor for an electric motor according to the invention in an advantageous embodiment. The rotor comprises a hollow shaft and a rotor core 2. The hollow shaft comprises a shaft core 1A and a supporting body 1B, wherein an inlet aperture 1AO is used for introducing a coolant into a main cavity 7 of the hollow shaft and wherein a plurality of channels 1C are provided in the area of a junction surface between the shaft core 1A and supporting body 1B. The main cavity 7 ensures homogeneous pressure distribution and uniform coolant discharge, preferably via all outlet apertures 3. The rotor core 2 comprises an impeller 2A with a plurality of blades 4, wherein the position of the channels 1C outlet apertures 3 in advantageous embodiment is aligned with a leading edge of the blades 4. The blades 4 are preferably curved.

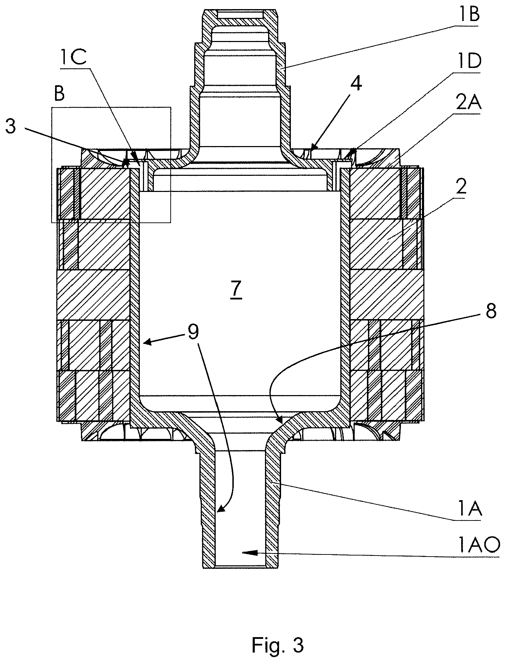

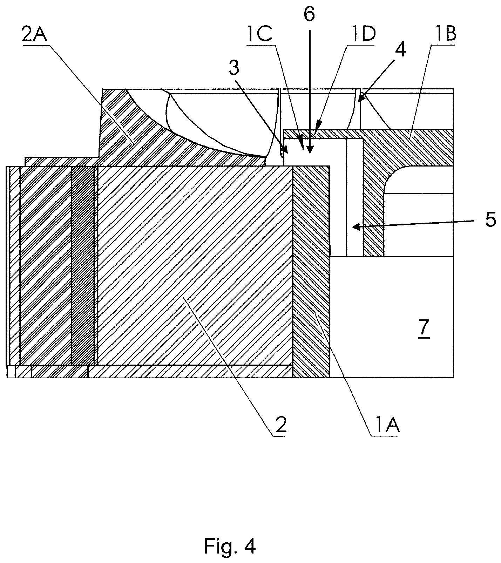

As shown in figs. 1 and 4, the outlet apertures 3 are directed radially outward and are arranged circumferentially between two adjacent blades 4. Regarding figs. 3, 4 and 5 the channels 1C have an axial area 5 and a radial area 6 adjoining it, wherein the outlet apertures 3 being located at the end of the radial area 6.

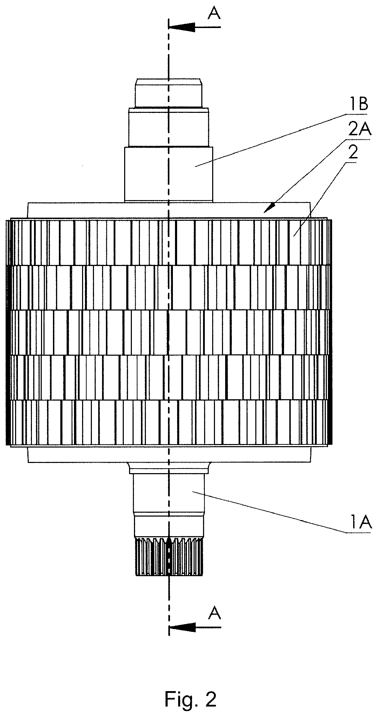

Fig. 2 shows a side view of the rotor for the electric motor according to the invention in the advantageous embodiment, where a plane for sectional view A-A is indicated.

Fig. 3 shows a sectional view A-A of the rotor for the electric motor according to the invention in the advantageous embodiment, where an area of detailed view B is indicated. In advantageous embodiment the hollow shaft, more precisely the supporting body 1B comprises a datum feature 1D for positioning the rotor core 2 and impeller 2A in regards to the position the channels 1C for releasing the coolant out of the hollow shaft. Advantageously, the performance of the impeller and thus cooling of the electric motor is significantly increased.

According to Fig. 3, the outlet apertures 3 are arranged only at the upper end of the main cavity 7, whereby an impeller 2 can also be arranged at the lower end. In purely theoretical terms, outlet apertures (not shown) could also be provided at the lower end, which cause coolant to flow out of the main cavity 7, preferably in the axial direction between two adjacent blades 4 of the impeller 2. From there, the coolant can then be conveyed further due to the centrifugal force and the blades 4. This could result in further improved cooling and, associated with this, an increase in the performance of the electric motor.

The inlet aperture 1AO is arranged radially inwardly of the plurality of channels 1C, and an inner wall 9 of the main cavity 7 extends over a curved or inclined section 8 towards the maximum diameter of the main cavity 7. In this way the coolant can be gradually accelerated to a maximum angular velocity in the main cavity 7 due to boundary flow of the coolant along the inner wall 9.

Fig. 4 shows a detailed sectional view of the rotor for the electric motor according to the invention in the advantageous embodiment, wherein the channels 1C for releasing the coolant out of the hollow shaft and the datum feature 1D are clearly visible.

The formation of the channels 1C at the supporting body 1B makes it comparatively easier to manufacture the channels 1C, since they do not have to be manufactured as closed channels, but the channels 1C are only formed by the assembly of 1B with the shaft core 1A. Thus, only a partial geometry of the channels 1C has to be manufactured in the supporting body 1B. This makes it generally easier to manufacture the supporting body 1B. The channel 1C is formed by the support body 1B and the shaft core 1A.

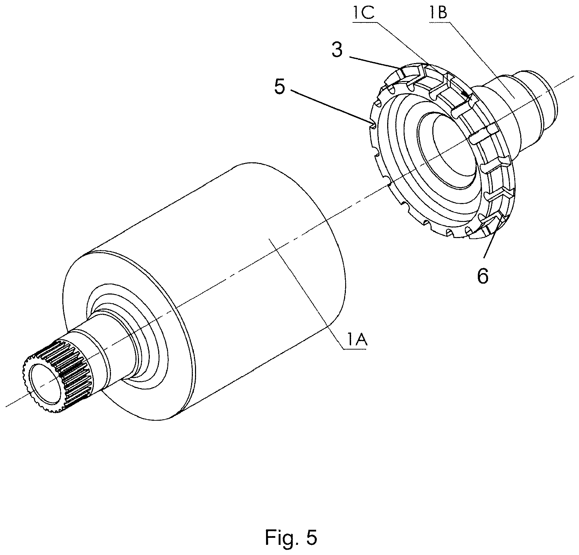

Fig 5 shows an isometric view of the hollow shaft according to the invention in the advantageous embodiment in an exploded view, wherein a details of channels 1C structure in form of a groove on the supporting body/shaft 1B are clearly visible, and wherein the surface for press-fit connection utilization between the shaft core 1A and matching surfaces on the supporting body 1B are evident. In addition or as an alternative to the press connection, an adhesive connection can of course also be used.

All parts of the rotor for the electric motor, in particular, the hollow shaft within the description is shown and described in the best mode embodiment. However, deviating shapes/sizes/distributions are also conceivable, wherein the coolant is preferably an oil, an air, or a mixture of oil and air.

## Claims

1. Rotor for an electric motor, wherein the rotor comprises a hollow shaft and a laminated rotor core (2), the laminated rotor core (2) further comprising a plurality of magnets and an impeller (2A) for a coolant flow utilization,
wherein
the hollow shaft further comprises an inlet aperture (1AO) for introducing the coolant directly into a main cavity (7) of the hollow shaft, and channels (1C) through which the coolant is released out of the hollow shaft,
wherein outlet apertures (3) of the channels (1C) are aligned with an intake area of the impeller (2A) for propelling the coolant through the cooling system of the electric motor,
wherein the outlet apertures (3) are directed radially outward and are arranged circumferentially between two adjacent blades (4) of the impeller (2A),
the channels (1C) have an axial area (5) and a radial area (6) adjoining it,
the outlet apertures (3) being located at the end of the radial area (6).

2. Rotor according to claim 1,
**characterized**
**in that** the hollow shaft comprises a shaft core (1A) and a supporting body (1B), wherein a plurality of the channels (1C) are provided in the area of a junction surface between the shaft core (1A) and supporting body (1B).

3. Rotor according to claim 1,
**characterized**
**in that** the outlet apertures (3) of the channels (1C) are aligned with a leading edge of the impeller (2A).

4. Rotor according to any one of the preceding claims,
**characterized**
**in that** the impeller (2A) has curved blades (4).

5. Rotor according to any one of the preceding claims,
**characterized**
**in that** a non-contacting stationary nozzle is provided, via which the coolant is releaseable into the shaft, preferably within an area of the inlet aperture (1AO).

6. Rotor according to claims 3 to 5,
**characterized**
**in that** the hollow shaft comprises a shaft core (1A) and a supporting body (1B), wherein a plurality of the channels (1C) are provided in the area of a junction surface between the shaft core (1A) and supporting body (1B), and
**in that** the supporting body (1B) comprises a datum feature (1D) for positioning the rotor core (2) and the impeller (2A) in regards to the position the channels (1C) for releasing the coolant out of the hollow shaft.

7. Rotor according to any one of the preceding claims,
**characterized**
**in that** the inlet aperture (1AO) is arranged radially inwardly of the plurality of channels (1C), and an inner wall (9) of the main cavity (7) extends over a curved or inclined section (8) towards the maximum diameter of the main cavity (7).

8. Synchronous electric motor comprising a rotor according to any one of the preceding claims.

## Patentansprüche

1. Rotor für einen Elektromotor, wobei der Rotor eine Hohlwelle und einen laminierten Rotorkern (2) umfasst, wobei der laminierte Rotorkern (2) weiter eine Vielzahl von Magneten und ein Laufrad (2A) für eine Kühlmittelströmungsnutzung umfasst, wobei
die Hohlwelle weiter eine Einlassöffnung (1 AG) zum direkten Einleiten des Kühlmittels in einen Haupthohlraum (7) der Hohlwelle, und Kanäle (1C), durch die das Kühlmittel aus der Hohlwelle abgegeben wird, umfasst,
wobei Auslassöffnungen (3) der Kanäle (1C) mit einem Ansaugbereich des Laufrads (2A) ausgerichtet sind, um das Kühlmittel durch das Kühlsystem des Elektromotors zu treiben,
wobei die Auslassöffnungen (3) radial nach außen gerichtet sind und umlaufend zwischen zwei benachbarten Schaufeln (4) des Laufrads (2A) angeordnet sind, wobei die Kanäle (1C) einen Axialbereich (5) und einen daran anschließenden Radialbereich (6) aufweisen, wobei sich die Auslassöffnungen (3) am Ende des Radialbereichs (6) befinden.

2. Rotor nach Anspruch 1,
**dadurch gekennzeichnet,**
**dass** die Hohlwelle einen Wellenkern (1A) und einen Stützkörper (1B) umfasst, wobei eine Vielzahl der Kanäle (1C) im Bereich einer Verbindungsfläche zwischen dem Wellenkern (1A) und Stützkörper (1B) vorgesehen sind.

3. Rotor nach Anspruch 1,
**dadurch gekennzeichnet,**
**dass** die Auslassöffnungen (3) der Kanäle (1C) mit einer Vorderkante des Laufrads (2A) ausgerichtet sind.

4. Rotor nach einem der vorstehenden Ansprüche,
**dadurch gekennzeichnet,**
**dass** das Laufrad (2A) gekrümmte Schaufeln (4) aufweist.

5. Rotor nach einem der vorstehenden Ansprüche,
**dadurch gekennzeichnet,**
**dass** eine berührungslose stationäre Düse vorgesehen ist, über die das Kühlmittel in die Welle, vorzugsweise innerhalb eines Bereichs der Einlassöffnung (1 AO), abgegeben werden kann.

6. Rotor nach den Ansprüchen 3 bis 5,
**dadurch gekennzeichnet,**
**dass** die Hohlwelle einen Wellenkern (1A) und einen Stützkörper (1B) umfasst, wobei im Bereich einer Verbindungsfläche zwischen dem Wellenkern (1A) und Stützkörper (1B) eine Vielzahl der Kanäle (1C) vorgesehen sind, und
**dass** der Stützkörper (1B) ein Bezugsmerkmal (1D) zum Positionieren des Rotorkerns (2) und des Laufrads (2A) im Hinblick auf die Position der Kanäle (1C) zum Abgeben des Kühlmittels aus der Hohlwelle aufweist.

7. Rotor nach einem der vorstehenden Ansprüche,
**dadurch gekennzeichnet,**
**dass** die Einlassöffnung (1 AG) radial innerhalb der Vielzahl von Kanälen (1C) angeordnet ist und eine Innenwand (9) des Haupthohlraums (7) sich über einen gekrümmten oder geneigten Abschnitt (8) zum maximalen Durchmesser des Haupthohlraums (7) hin erstreckt.

8. Synchronelektromotor, umfassend einen Rotor nach einem der vorstehenden Ansprüche.

## Revendications

1. Rotor pour un moteur électrique, dans lequel le rotor comprend un arbre creux et un noyau de rotor laminé (2), le noyau de rotor laminé (2) comprenant en outre une pluralité d'aimants et une roue à aubes (2A) pour une utilisation de flux de liquide de refroidissement, dans lequel
l'arbre creux comprend en outre une ouverture d'entrée (1AO) pour introduire le liquide de refroidissement directement dans une cavité principale (7) de l'arbre creux, et des canaux (1C) à travers lesquels le liquide de refroidissement est libéré de l'arbre creux,
dans lequel des ouvertures de sortie (3) des canaux (1C) sont alignées avec une zone d'admission de la roue à aubes (2A) pour propulser le liquide de refroidissement à travers le système de refroidissement du moteur électrique,
dans lequel les ouvertures de sortie (3) sont dirigées radialement vers l'extérieur et sont agencées de manière circonférentielle entre deux aubes adjacentes (4) de la roue à aubes (2A), les canaux (1C) présentent une zone axiale (5) et une zone radiale (6) adjacente à celle-ci, les ouvertures de sortie (3) étant situées à l'extrémité de la zone radiale (6).

2. Rotor selon la revendication 1,
**caractérisé**
**en ce que** l'arbre creux comprend un noyau d'arbre (1A) et un corps de support (1B), dans lequel une pluralité des canaux (1C) sont fournis dans la zone d'une surface de jonction entre le noyau d'arbre (1A) et le corps de support (1B).

3. Rotor selon la revendication 1,
**caractérisé**
**en ce que** les ouvertures de sortie (3) des canaux (1C) sont alignées avec un bord avant de la roue à aubes (2A).

4. Rotor selon l'une quelconque des revendications précédentes,
**caractérisé**
**en ce que** la roue à aubes (2A) présente des aubes incurvées (4).

5. Rotor selon l'une quelconque des revendications précédentes,
**caractérisé**
**en ce qu'**une buse fixe sans contact est fournie, par l'intermédiaire de laquelle le liquide de refroidissement peut être libéré dans l'arbre, de préférence dans une zone de l'ouverture d'entrée (1AO).

6. Rotor selon les revendications 3 à 5,
**caractérisé**
**en ce que** l'arbre creux comprend un noyau d'arbre (1A) et un corps de support (1B), dans lequel une pluralité des canaux (1C) sont fournis dans la zone d'une surface de jonction entre le noyau d'arbre (1A) et le corps de support (1B), et
**en ce que** le corps de support (1B) comprend un élément de référence (1D) pour positionner le noyau du rotor (2) et la roue à aubes (2A) par rapport à la position des canaux (1C) pour libérer le liquide de refroidissement de l'arbre creux.

7. Rotor selon l'une quelconque des revendications précédentes,
**caractérisé**
**en ce que** l'ouverture d'entrée (1AO) est agencée radialement vers l'intérieur de la pluralité de canaux (1C), et une paroi interne (9) de la cavité principale (7) s'étend sur une section incurvée ou inclinée (8) vers le diamètre maximal de la cavité principale (7).

8. Moteur électrique synchrone comprenant un rotor selon l'une quelconque des revendications précédentes.
